# EUROPÄISCHE PATENTSCHRIFT

(11) **EP 1 220 712 B1**
(45) Veröffentlichungstag und Bekanntmachung des Hinweises auf die Patenterteilung: **19.01.2005**
(21) Anmeldenummer: 00962447.9
(22) Anmeldetag: 06.09.2000
(51) Int. Cl.: B01D 53/08, B01D 46/36, B01J 8/00, B01D 53/83

(54) **VERFAHREN, VORRICHTUNG UND ANLAGE ZUM BEHANDELN VON FLUIDEN AN MINDESTENS EINER SCHÜTTGUTSCHICHT**
METHOD, DEVICE AND INSTALLATION FOR TREATING FLUIDS ON AT LEAST ONE BULK MATERIAL LAYER
PROCEDE ET DISPOSITIF DESTINES AU TRAITEMENT DE FLUIDES AU NIVEAU D'AU MOINS UNE COUCHE DE MATIERE EN VRAC

(30) Priorität: 06.09.1999 DE 19942335; 06.09.1999 DE 19942495
(43) Veröffentlichungstag der Anmeldung: 10.07.2002
(73) Patentinhaber: Grochowski, Horst, 46149 Oberhausen (DE)
(72) Erfinder: Grochowski, Horst, 46149 Oberhausen (DE)
(74) Vertreter: GROSSE BOCKHORNI SCHUMACHER
(86) Internationale Anmeldenummer: PCT/EP2000/008710
(87) Internationale Veröffentlichungsnummer: WO 2001/017663

(56) Entgegenhaltungen:
- DE-A- 3 910 227
- DE-A- 3 916 325
- US-A- 5 603 907
- US-A- 5 897 282

## Beschreibung

Die Erfindung betrifft ein Verfahren zum Behandeln, insbesondere zum Reinigen von Fluiden gemäß den Oberbegriffen der Ansprüche 1 und 18, sowie eine Chargiervorrichtung und eine Gasbehandlungsanlage zum Durchführen des Verfahrens gemäß den Oberbegriffen der Ansprüche 8 und 10.

Bei Anlagen zum Behandeln großer Gasmengen, wie sie z. B. als Abgas bei Verbrennungsprozessen anfallen, insbesondere zum Entfernen von umweltschädlichen Komponenten, wie Dioxinen, Furanen, Schwefelverbindungen, Chlorverbindungen, Stickstoffverbindungen, Kohlenwasserstoffen, Schwermetallen und/oder anderen Komponenten, an einem Schüttgut besteht ein wesentliches Problem in der Großflächigkeit der gelegentlich auch als "Filter" bezeichneten Schüttgutschicht. Es ist nämlich erwünscht, den Strömungswiderstand durch die Schüttgutschicht gering zu halten und gleichzeitig eine hohe Behandlungsqualität über den gesamten Filterquerschnitt dauerhaft sicherzustellen. Um dies zu erreichen muß das Schüttgut, wenn es im Gegenstrom zu dem zu behandelnden Fluid, also besonders wirkungsvoll, genutzt werden soll, im Wege eines Schüttgutteilaustausches immer wieder gleichmäßig am Boden der Schüttgutschicht, dem Anströmboden, abgezogen und ebenso gleichmäßig frisches Schüttgut über die Bettoberfläche verteilt zugeführt werden. Dieses Problem ist großtechnisch mittels sogenannter Wanderbettreaktoren gelöst worden, wie sie in den Druckschriften WO 88/08746, WO 91/12069 und EP 0 472 565 beschrieben worden sind.

Bei diesen bekannten Verfahren, Vorrichtungen und Anlagen wird das Schüttgut über Schüttgutvorratsbunker und Schüttgutverteilböden, die unmittelbar oberhalb jedes Schüttgutbettes angeordnet sind, zugeführt. Die Schüttgutentladeöffnungen der Schüttgutverteilböden werden von permanent offenen Rohrmündungen gebildet, unterhalb derer sich jeweils ein Schüttgutkegel ausbildet. Da diese Mündungsöffnungen über den Bettquerschnitt gleichmäßig verteilt sind, ist die Schüttgutbettoberfläche von einer Mehrzahl solcher Schüttgutkegel gebildet. Der zwischen der Schüttgutbettoberfläche und dem Schüttgutverteilboden zwangsläufig verbleibende Hohlraum jedes Bettes dient als Gassammelraum, der über eine verschließbare Öffnung in der Seitenwand des das Schüttgutbett aufnehmenden Behälters (Reaktors) mit einem Gassammel- oder Abströmkanal, in den die zusammengefaßten Abgasströme aller Betten münden, verbunden ist. Durch die permanent offenen Mündungs- oder Entladeöffnungen des Schüttgutverteilbodens kann zu behandelndes Fluid auch in den Schüttgutvorratsbunker eindringen. Daher sind besondere Vorkehrungen zu treffen, daß die Nachfüllöffnungen der Schüttgutvorratsbunker stets ausreichend dicht verschlossen sind und daß in den Vorratsbunkern eindringende behandelte Gase in den Vorratsbunkem keine unerwünschten Reaktionen, wie z. B. durch sauerstoffhaltige Schleichströmung, sogenannte Hot Spots, hervorrufen.

Ein weiteres Problem besteht darin, daß die Eignung der verfügbaren Behandlungsschüttgüter sehr unterschiedlich ist und für besonders hohe Konzentrationen an zu behandelnden Fluidkomponenten und/oder sehr unterschiedlichen zu behandelnden Fluidkomponenten - für sich allein genommen - nicht ausreichen, um das gewünschte Behandlungsergebnis in einem einzigen Arbeitsgang zu erreichen.

Ein weiteres Problem bei den bekannten Fluidbehandlungsanlagen besteht darin, daß die Art des Verteilens des Schüttgutes auf die Reaktorbetten und/oder das Austragen des Schüttgutes eine relativ starre Festlegung auf eine vorbestimmte Verfahrensweise bei der Fluidbehandlung zur Folge haben.

Davon ausgehend liegt der Erfindung die Aufgabe zugrunde ein Verfahren, eine Schüttgutaufgabevorrichtung und eine Gasbehandlungsanlage vorzuschlagen, durch welche eine höhere Flexibilität der Fluidbehandlung mittels eines mit Schüttgut gefüllten Wanderbettreaktors erreicht wird. Ferner ist es erwünscht, daß das Leckagerisiko für behandeltes Gas oberhalb des Schüttgutbettes verringert wird.

Da die bekannten Wanderbettreaktoranlagen eine im Vergleich zur Betthöhe große Anlagenhöhe aufweisen, besteht ein anderes Ziel darin, die Anlagengröße und damit auch den Erstellungsaufwand einer solchen Anlage deutlich zu verringern.

Da bei den bekannten Wanderbettreaktoranlagen die automatische oder teilautomatische Nachfüllung der Vorratsbunker oberhalb der benachbarten Schüttgutbetten z. B. über Kettentrogförderer und öffen- und schließbare Vorratsbunkerluken erfolgt, besteht ein weiteres Ziel der Erfindung darin, den Aufwand für die Schüttgutverteilung auf die einzelnen Schüttgutbetten zu verringern. Es ist auch erwünscht, den Abriebverschleiß, den das Schüttgut in den bekannten Schüttgutverteileinrichtungen erleidet, zu verringern, allgemein also das frische Schüttgut besser zu schonen.

Schließlich besteht noch ein anderes Ziel der Erfindung darin, die Fluidbehandlungsmöglichkeiten in ein und derselben Behandlungsstufe zu erweitern, insbesondere eine vereinfachte Möglichkeit zu schaffen, um das Fluid an Schüttgütern mit unterschiedlichen Behandlungseigenschaften bei Verwendung ein und derselben Schüttgutschicht zu behandeln, wie z. B. einerseits auf adsorptivem Wege und andererseits auf dem Wege der chemischen Umsetzung, wie dies für Schüttgutmischungen z. B. aus Aktivkohle oder Aktivkoks einerseits und Calciumhydroxyd andererseits bekannt ist, wie z. B. beim Flugstromvertahren, bei dem Schüttgüter zur Ausbildung eines Flugstromes (mit dem zu behandelnden Fluid) fein aufgemahlen werden.

Zur Lösung der eingangs genannten Aufgabe wird das Verfahren mit den Merkmalen der Ansprüche 1 oder 18, die Schüttgutaufgabevorrichtung mit den Merkmalen des Anspruchs 8 und/oder Gasbehandlungsanlagen mit den Merkmalen des Anspruchs 10 vorgeschlagen.

Demnach basiert die Erfindung auf dem Grundgedanken, einen Schüttgutaufgabebehälter innerhalb oder außerhalb des Reaktors zu verwenden, der in einer Chargierposition mit Schüttgut beladen und über die verschiedenen Schüttgutbetten zur Schüttgutteilmengenabgabe verfahren wird. Dies kann insbesondere so erfolgen, daß der Schüttgutaufgabebehälter mit mindestens einer Beladeöffnung und mindestens einer verschließbaren Entladeöffnung versehen ist und nach dem Beladen mit Schüttgut aus der Chargierposition heraus über ein erstes Bett verfahren wird. Dort wird mindestens eine Entladeöffnung freigegeben und er wird solange entladen, bis das darunter befindliche Schüttgutbett seine Sollhöhe an Schüttgut wieder erreicht hat, nachdem zuvor oder gleichzeitig am unteren Bettende eine Schüttgutteilmenge abgezogen worden ist. Danach wird die mindestens eine Entladeöffnung verschlossen und der Schüttgutaufgabebehälter zu einem anderen Bett oder in eine andere Beladeposition desselben Bettes weiterverfahren. Danach kann sich der Vorgang der Bettnachfüllung bei dem nächsten angefahrenen Schüttgutbett wiederholen. Später kehrt der Schüttgutaufgabebehälter in seine Chargierposition zurück, um wieder neu mit Schüttgut beladen zu werden.

Ein erfindungsgemäßer Schüttgutaufgabebehälter ist zweckmäßigerweise so breit wie die Breite des Schüttgutbettes quer zur Verfahrrichtung des Schüttgutaufgabebehälters. Die in Verfahrrichtung gesehene Länge des Schüttgutaufgabebehälters kann so groß wie die Länge eines oder mehrerer der nachzufüllenden Schüttgutbetten, aber auch kürzer, z. B. halb so lang oder noch kürzer sein. Ebenso ist es möglich, den Schüttgutaufgabebehälter mit einer Mehrzahl von über seine Bodenfläche verteilten verschließbaren Entladeöffnungen zu versehen. Es ist aber auch möglich, die Entladeöffnungen in einer einzigen Reihe nebeneinander anzuordnen oder einen länglichen Spalt als Entladeöffnung zu verwenden, insbesondere mit dem Schüttgutaufgabebehälter während des Entladevorganges entlang der Verfahrrichtung weiter zu fahren bzw. in verschiedenen Positionen nur kurz anzuhalten, so daß das Schüttgutnachfüllen allmählich, von der einen Schüttgutbett-Kante beginnend bis zur gegenüberliegenden Schüttgutbett-Kante sukzessive erfolgt. Durch die geöffneten Entladeöffnungen kann in jedem Fall nur solange Schüttgut aus dem Schüttgutaufgabebehälter austreten, bis die sich darunter befindende Schüttgutschicht die Entladeöffnung des Schüttgutaufgabebehälters erreicht hat und dadurch den Nachstrom von Schüttgut stoppt. Wenn der Schüttgutaufgabebehälter während der Schüttgutteilmengenzugabe auf ein bestimmtes Schüttgutbett kontinuierlich oder absatzweise weiterbewegt wird, können dadurch besonders erwünschte Topographien an der Schüttgutbettoberfläche erzielt werden. Insbesondere kann mit relativ wenigen Entladeöffnungen eine Welligkeit vergleichsweise geringer Amplitude als Schüttgutbettoberflächenkontur erzielt werden und der Schüttgutaufgabebehälter entsprechend einfach gestaltet werden.

Ebenso wie die Schüttgutbetten durch Verfahren des unten offenen Schüttgutaufgabebehälters entlang der Schüttgutbettoberfläche mit einer Schüttgutteilmenge aufgefüllt werden können, ist es möglich, den Schüttgutaufgabebehälter mittels mindestens eines Chargierbehälters mit linienförmig ausgebildeter Chargieröffnung zu chargieren, indem der Chargierbehälter und/oder der Schüttgutaufgabebehälter relativ zueinander bewegt werden.

Es können auch mehrere Chargierbehälter mit linienförmiger Chargieröffnung zum Einsatz kommen, welche mit unterschiedlichen Schüttgütem befüllt sind, z. B. einer mit einem Adsorptionsmittel und ein anderer mit einem chemischen Reaktionsmittel. Wenn die Chargierbehälter nacheinander relativ zum Schüttgutaufgabebehälter verfahren werden und dabei jeweils eine andere Schüttgutschicht in den Schüttgutaufgabebehälter abgeben wird, wird der Schüttgutaufgabebehälter somit mit etwa parallelen, insbesondere planparallelen Schichten verschiedener Fluidbehandlungsmittel gefüllt. Das gleiche kann erreicht werden, wenn der Schüttgutaufgabebehälter bei seiner Befüllung unter einem geteilten Vorratsbunker mit nebeneinanderliegenden Auslaßöffnungen entlangfährt. Dann können planparallele Schichten von verschiedenen Granulaten übereinander erzeugt werden. Die Schichtstärke wird dabei durch den vertikalen Abstand der Vorratsbunkerauslaßöffnungen bestimmt. Wenn beim Schüttgutteilaustausch die Schüttgutzugabemenge entsprechend gesteuert wird, wird sowohl von dem einen als auch von dem anderen Schüttgut mindestens je eine dünne Schicht in das jeweilige Schüttgutbett überführt. Dadurch wird es möglich, schichtweise aufgebaute Schüttgutbetten zu realisieren, innerhalb derer gleichzeitig verschiedene Gasbehandlungsprozesse stattfinden, wie z. B. Adsorptionsprozesse und chemische Umwandlungsprozesse. Es können auch mehrere mit unterschiedlichen Fluidbehandlungsmitteln befüllte Schüttgutaufgabebehälter nacheinander über die Schüttgutbetten gefahren werden, um denselben Schichteneffekt zu erzielen. Oder derselbe Schüttgutaufgabebehälter wird nacheinander mit jeweils anderen Fluidbehandlungsmitteln befüllt und über denselben Schüttgutbetten entleert. Auch kann eine Schüttgutschicht als Gemisch aus verschiedenen Granulaten aufgebaut sein.

Aus dem Vorangehenden wird deutlich, daß eine "Fluidbehandlung" im Sinne der Erfindung u. a. eine chemische Behandlung, eine adsorptive Reinigungsbehandlung, aber auch eine Wärmebehandlung sein kann. Wärmebehandlungen können z. B. durch Eintragen von Wärmeenergieträgern oder durch Wärmeerzeugung durch chemische Reaktion realisiert werden.

Eine erfindungsgemäße Gasbehandlungsanlage zum Durchführen des vorangehend beschriebenen Verfahrens weist einen horizontalen Chargierkanal auf, der oberhalb der Schüttgutbetten angeordnet ist und diese miteinander verbindet, so daß der Schüttgutaufgabebehälter durch den Chargierkanal zwischen einer Chargierposition und den Schüttgutaufgabepositionen oberhalb der Betten verfahrbar ist. Ein derartiger Chargierkanal kann oberhalb von Schüttgutverteilböden angeordnet sein, die oberhalb jedes Schüttgutbettes angeordnet sind. Der Chargierkanal kann außerhalb des Reaktors angeordnet sein; vorzugsweise ist er innerhalb des Reaktors untergebracht. Er kann die Vorratsbunker ersetzen. Die nach dem Stand der Technik vorgesehenen Vorratsbunker für jedes Schüttgutbett können also oberhalb der Schüttgutverteilböden zu einem gemeinsamen horizontalen Chargierkanal zusammengefaßt werden. Dadurch entfallen sowohl die Einfüllöffnungen für die Vorratsbunker als auch der materialverschleißende Transport des Schüttgutes oberhalb der Reaktordecke, wie er aus dem eingangs zitierten Stand der Technik bekannt ist. Genauso ist es möglich, auch die Schüttgutverteilböden völlig entfallen zu lassen und die Gassammelräume benachbarter Schüttgutbetten miteinander zu einem horizontalen Chargierkanal zusammenzufassen. Dadurch wird die Bauhöhe der Gasbehandlungsanlage noch stärker verringert. Bei einer derartigen Anordnung kann der Schüttgutaufgabebehälter die Funktion von Drossel- oder Verschließklappen übernehmen, welche einen Austritt von behandeltem Gas aus einem Schüttgutbett verhindert, wenn der Schüttgutaufgabebehälter oberhalb des betreffenden Schüttgutbettes steht und eine Schüttgutteilnachfüllung vorgenommen wird. Dies drosselt oder verhindert den Gasstrom durch das betreffende Schüttgutbett, wie es in dem Dokument WO 91/12069 gewünscht wird. Vorteilhafterweise können bei der hier vorliegenden Erfindung die Drossel- oder Absperrorgane deren Funktion der Schüttgutaufgabebehälter übernimmt, entfallen.

Der Schüttgutabzug unterhalb jedes Schüttgutbettes kann, wie im eingangs erwähnten Stand der Technik beschrieben, über Trichter oder zur Erzielung geringerer Bauhöhe mittels eines Förderbandes erfolgen. Besonders vorteilhaft ist es allerdings, wenn unterhalb der Schüttgutaustragsöffnungen der Schüttabzugsböden der einzelnen Schüttgutbetten ein horizontaler Entsorgungskanal vorgesehen ist, durch welchen ein für alle verbundenen Schüttgutbetten wirksames Längsfördermittel für Schüttgutabtransporte verfahrbar ist. Dies kann ein Förderband sein. Besonders vorteilhaft ist es allerdings, einen Schüttgutaufnahmebehälter vorzusehen, der sich - wie der Schüttgutaufgabebehälter - über die gesamte Bettbreite erstreckt und in der Bettlängsrichtung verfahrbar ist. Verfahrenstechnisch besonders günstig ist es, wenn sowohl der Schüttgutaufgabebehälter als auch der Schüttgutaufnahmebehälter jeweils oberhalb und unterhalb desselben Schüttgutbettes in Position gelangen. Wenn dann Schüttgutaustragsvorrichtungen des betreffenden Schüttgutbettes geöffnet bzw. betätigt werden, fällt das abgezogene Schüttgut sogleich in den Schüttgutaufnahmebehälter und an der Schüttgutbettoberfläche fließt von oben frisches Schüttgut aus dem Schüttgutaufgabebehälter nach. Dadurch ist gewährleistet, daß stets die volle Betthöhe eingehalten wird.

In allen Fällen, in denen ein gemeinsamer Entsorgungskanal unterhalb der benachbarten Schüttgutbetten vorgesehen ist, ist nur eine einzige Schüttgutaustragsstelle für die gesamte Gasbehandlungsanlage bzw. einen Strang von benachbarten Schüttgutbetten erforderlich, so daß vergleichsweise weniger Maßnahmen zum Verhindern von Gasleckagen erforderlich sind. Für den Entsorgungskanal sind - ebenso wie für den Chargierkanal - wiederum zwei Anordnungsmöglichkeiten realisierbar: Bei der einen Anordnung ist der Entsorgungskanal anstelle von Schüttgutaustragstrichtem unterhalb des geschlossenen Gasverteilraums vorgesehen. In dem anderen Fall wird der Entsorgungskanal höher angeordnet, nämlich innerhalb der Gasverteilräume der benachbarten Schüttgutbehälter, die zu diesem Zweck unter Fortlassen von seitlichen Trennwänden miteinander zu dem Entsorgungskanal verbunden werden. Hierdurch wird die Anlagenhöhe weiter verringert und kann der Schüttgutaufnahmebehälter die Funktion von Drossel- oder Absperrmitteln erfüllen, indem er die Gaseintrittsöffnungen zum Gasverteilraum unterhalb des Schüttgutbettes, unter dem sich der Schüttgutaufnahmebehälter gerade befindet, verschließt oder zumindest querschnittsverengt, so daß zu Zeiten des Schüttgutteilaustausches nur verringerte Mengen an zu behandelndem Gas oder gar kein Gas in das im Schüttgutteilaustausch befindliche Schüttgutbett strömen kann.

Die Chargierpositionen können auch beidendig der Verfahrstrecke vorgesehen sein, um den Strom an zu behandelndem Gas sowenig wie möglich zu beeinträchtigen. Es ist denkbar, in der Chargierposition den Schüttgutaufgabebehälter auch vertikal zu einer anderen Etage zu verfahren, z. B. im Kreislauf über zwei Ebenen.

Ein besonders hoher Nutzen wird durch ein zweistufiges, insbesondere trockenes Fluidbehandlungsverfahren nach Anspruch 18 erreicht, bei dem eine Behandlung im Flugstrom und eine Behandlung im Wanderbett, vorzugsweise mit voneinander verschiedenen Behandlungsmitteln, kombiniert werden und welches auch unabhängig von den Merkmalen des Anspruchs 1 von erfinderischer Bedeutung ist.

Die vorgenannten, sowie die beanspruchten und in den Ausführungsbeispielen beschriebenen, erfindungsgemäß zu verwendenden Verfahrensschritte sowie Bauteile unterliegen hinsichtlich ihrer Verfahrensbedingungen, ihrer Größe, Formgestaltung, Materialauswahl und technischen Konzeption keinen besonderen Ausnahmebedingungen, so daß die in dem jeweiligen Anwendungsgebiet bekannten Auswahlkriterien uneingeschränkt Anwendung finden können.

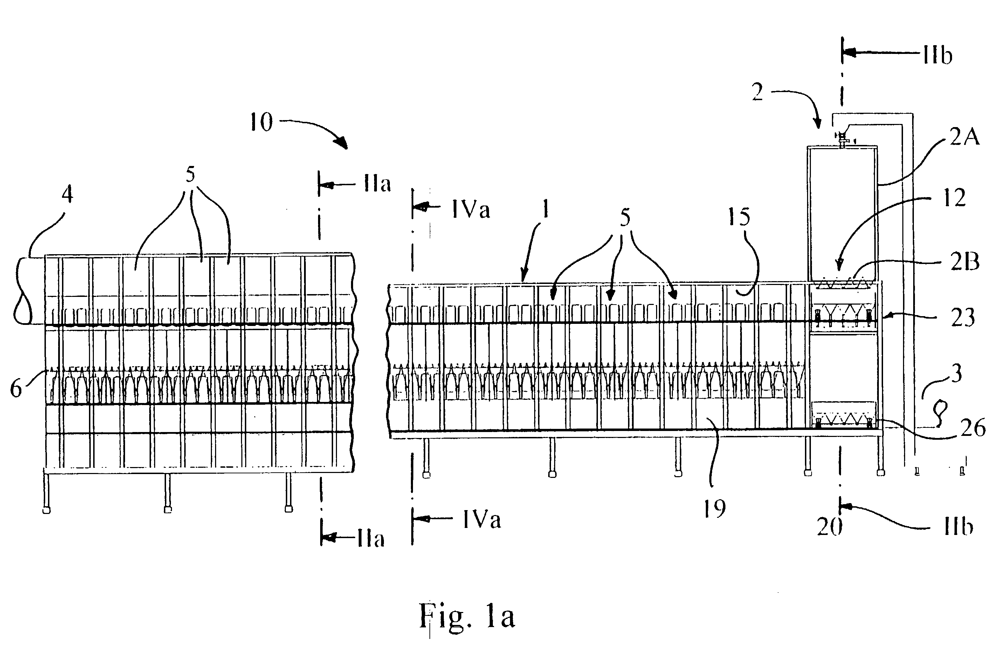

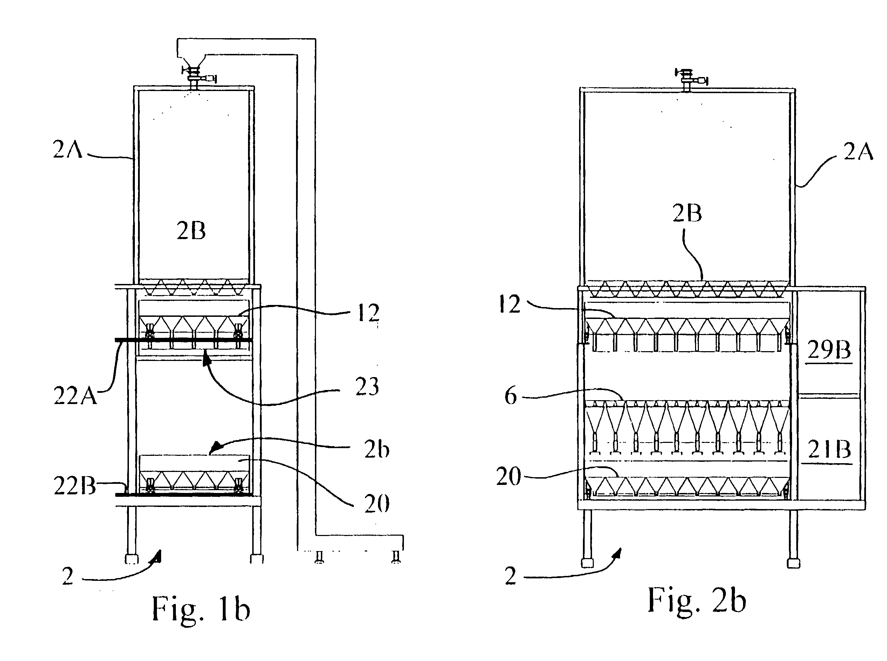

Weitere Einzelheiten, Merkmale und Vorteile des Gegenstandes der Erfindung ergeben sich aus der nachfolgenden Beschreibung der zugehörigen Zeichnung, in der - beispielhaft - bevorzugte Ausführungsformen der Chargiervorrichtung und Gasbehandlungsanlage sind. In der Zeichnung zeigen
- Fig. 1a: eine Fluidbehandlungsanlage im Längsschnitt (Schnitt entlang der Linie Ia-Ia gemäß Fig. 2b);
- Fig. 1 b: eine vergrößerte Darstellung des rechten Teils der Fig. 1 a;
- Fig. 2a: dieselbe Fluidbehandlungsanlage im Querschnitt (Schnitt entlang der Linie IIa-IIa gemäß Fig. 1a);
- Fig. 2b: dieselbe Fluidbehandlungsanlage im Querschnitt (Schnitt entlang der Linie IIb-IIb gemäß Fig. 1a);
- Fig. 3: von derselben Gasbehandlungsanlage einen verfahrbaren Schüttgutaufgabebehälter in perspektivischer Darstellung;
- Fig. 4a: von derselben Fluidbehandlungsanlage ein weiterer Querschnitt (Schnitt entlang der Linie IVa-IVa gemäß Fig. 1a);
- Fig. 4b: von der Darstellung nach Fig. 4a ein vergrößerter Ausschnitt;
- Fig. 5: für eine alternative Fluidbehandlungsanlage einen Schüttgutaufgabebehälter mit einem Chargierbehälter, perspektivisch;
- Fig. 6a: von derselben Fluidbehandlungsanlage eine perspektivische Darstellung des in Fig. 4a gezeigten Anlagenteils (ohne Schüttgut);
- Fig. 6b: dieselbe Fluidbehandlungsanlage wie in Fig. 6a dargestellt, jedoch ohne Schüttgutaufgabe- und Schüttgutaufnahmebehälter aber mit Schüttgutschicht.

In Fig. 1a ist ein Rohrkanal 1 erkennbar, an dessen rechtem Stimende sich eine Chargierstation 2 und ein Gaseintrittsstutzen 3 und an dessen linkem Ende sich ein Gasaustrittsstutzen 4 befindet, durch welche die im Inneren des Rohrkanals 1 sich befindende Fiuidbehandlungsanlage 10 mit dem zu behandelnden Fluid beaufschlagt bzw. davon entsorgt wird. Der Rohrkanal 1 kann also im Fluidweg vorgeschaltete oder nachgeschaltete Reaktoren verbinden, z. B. eintrittsseitig einen thermischen Reaktor, wie eine Wärmebehandlungsanlage, und andererseits eine nachgeschaltete Fluidbehandlungs-/Reinigungsstufe oder einen Abgaskamin. Je nach vorhandenen Platzverhältnissen kann der Rohrkanal 1 auch mindestens eine Fluidumlenkstelle aufweisen, so daß Gaseintrittsstutzen und Gasaustrittsstutzen relativ dicht nebeneinander angeordnet sein können. Er kann ebenso horizontal wie vertikal meandrierend ausgeführt sowie mehrlagig ausgeführt sein, also mehrere Fluidumlenk- oder Verteilstellen besitzen, um den gegebenen Platzverhältnissen gerecht zu werden. So können in bequemer Weise relativ große Filterflächen, d. h. für Behandlungsanlagen für außerordentlich große Fluidströmungsraten, realisiert werden.

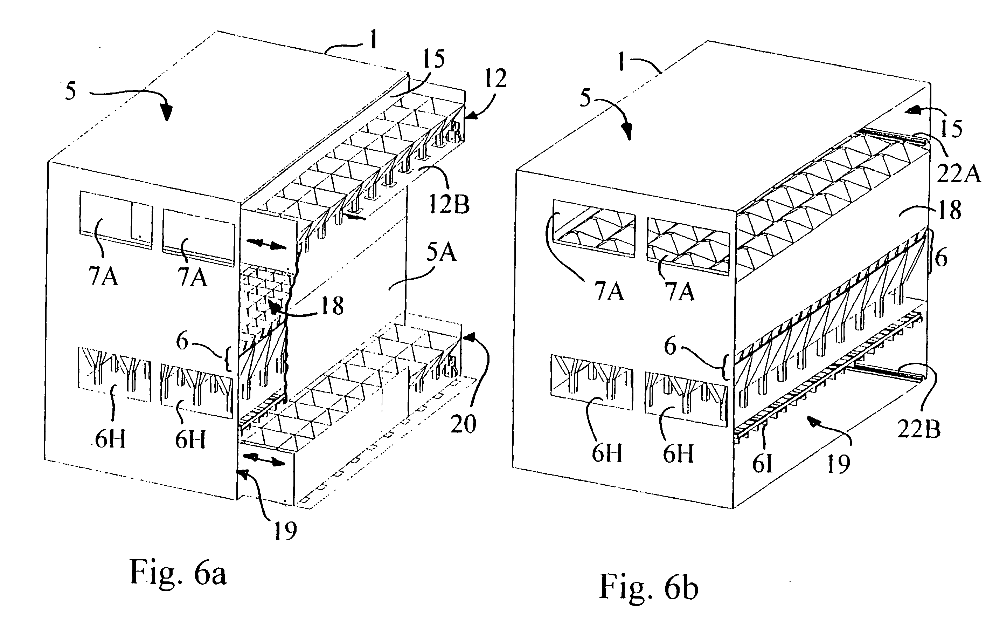

Der Rohrkanal 1 ist in seinem Inneren mit einer Mehrzahl von in Richtung der Rohrkanalachse nebeneinander angeordneten Wanderbettreaktormodulen 5 ausgestattet, die lediglich durch Trennwände aus Blech, die sich quer zur Reaktorkanalachse erstrecken, voneinander getrennt sind. Derartige Wanderbettreaktormodule 5 sind in den Figuren 6a und 6b beispielhaft dargestellt und werden in diesem Zusammenhang noch näher erläutert werden.

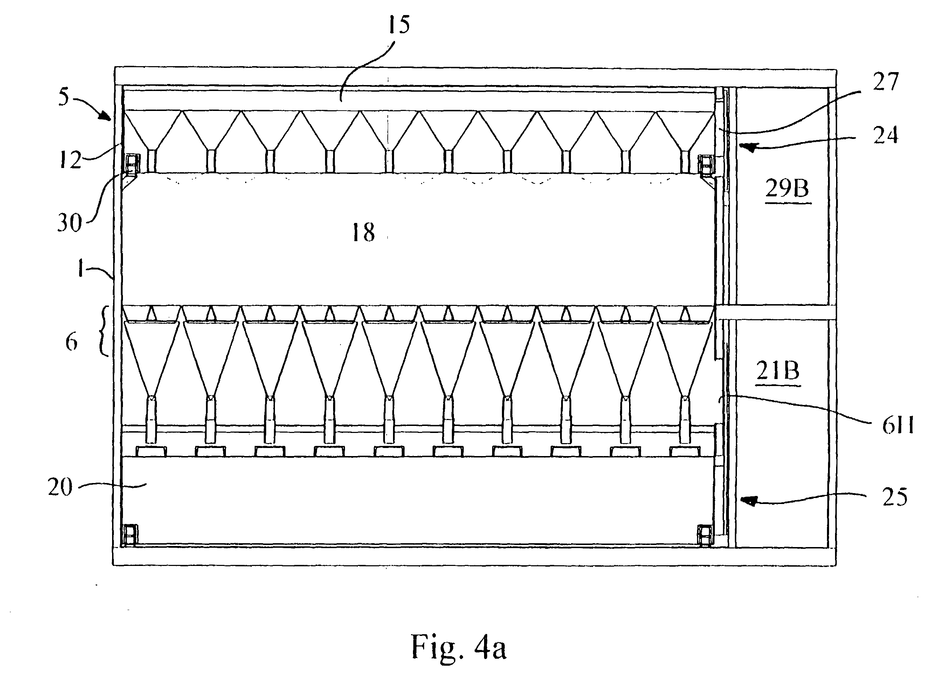

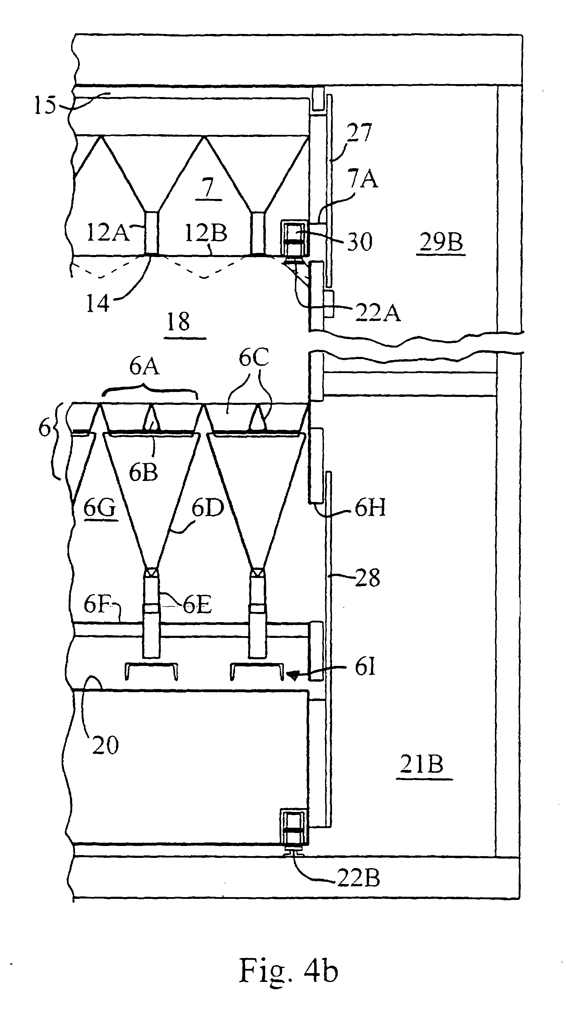

An dieser Stelle sei unter weiterer Bezugnahme auf Fig. 4a und 4b bereits soviel erwähnt, daß die Wanderbettreaktormodule aus folgenden Komponenten bestehen: einem Schüttgutbett 18, aus einem partikelförmigen Schüttgut, z. B. einer Aktivkohle, einem Katalysator, Calciumhydroxyd und/oder anderem. Das Schüttgutbett hat eine von Seitenwänden umfaßte z. B. quadratische Grundfläche und eine dem Behandlungsprozeß angepaßte Betthöhe von z. B. 1,2 m. Es ruht auf einem sogenannten Anströmboden 6, welcher vorzugsweise die aus dem Europäischen Patent Nr. 0 257 653 B1 bekannte Ausgestaltung hat, also aus zumindest nebeneinander angeordneten ersten Schüttgutabzugtrichtem 6A oder trichterförmigen Schüttgutabzugsrinnen besteht. Deren Seitenwände weisen Durchtrittsöffnungen 6B auf. Oberhalb derselben befinden sich dachförmige Verteilelemente, die von den Trichterwänden 6A zum Trichterinneren hin abstehen und den Durchtritt des Schüttgutes nach unten und den Eintritt des Fluides in das Schüttgutbett nach oben gestatten. Ein weiterer Fluideintrittsspalt bildet sich am Mündungsumfang vom zweiten Schüttgutabzugstrichter 6D, der sich an die Auslaßmündung der ersten Schüttgutabzugtrichter 6A mit Umfangsspalt nach unten hin anschließt. Sich an die zweiten Schüttgutabzugstrichter 6D nach unten anschließende Schüttauslaßrohre 6E, welche aus thermischen und mechanischen Gründen teleskopierbar ausgeführt sein können, durchdringen eine Staubdecke 6F in Gestalt eines querschnittfüllenden Bodens. Dieser Boden 6F, die Schüttgutabzugstrichter 6A/6D sowie die äußeren Umfassungswände umschließen einen Fluidverteilraum 6G unterhalb des Schüttgutbettes 18. Ein neben einer Seitenwand des Fluidverteilraums 6G, vorzugsweise innerhalb, des Rohrkanals 1 parallel zu dessen Längsachse sich erstreckender seitlicher Zuströmkanal 21 B leitet das zu behandelnde Fluid entlang des gesamten Rohrkanals 1. Da alle Fluidverteilräume 6G durch ein Anströmfenster 6H in der Trennwand zu dem unmittelbar benachbarten Zuströmkanal 21 B versehen sind, kann jedes Wanderbettreaktormodul des Rohrkanals gleichmäßig mit zu behandelndem Fluid beaufschlagt werden, wobei ausreichende Strömungsquerschnitte sicherstellen, daß der Druckverlust in allen Schüttgutbetten so gut wie gleich groß ist.

Unterhalb der Staubdecke 6F ist unter jedem Schüttgutauslaßrohr 6E eine getaktet horizontal verfahrbare Schüttgutaustragsvorrichtung 6I angeordnet. Deren Aufbau kann an sich beliebig sein, z. B. wie in der EP 0 357 653 B1 näher beschrieben.

Oberhalb jeder Schüttgutschicht 18 befindet sich ein Gassammelraum 7, mit einem seitlichen Abströmfenster 7A zur fluidischen Verbindung mit einem Abströmkanal 29B für behandeltes Fluid. Dieser erstreckt sich entlang des Rohrkanals 1 auf dessen voller Länge.

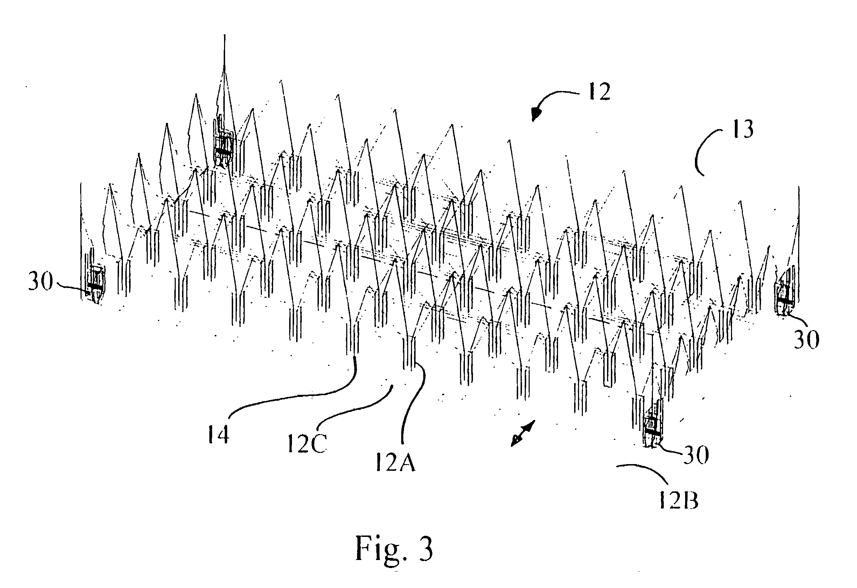

Wie aus Figur 3 näher ersichtlich, ist ein Schüttgutaufgabebehälter 12 vorgesehen, der entlang von Führungen 22A mittels eines einfachen Fahrwerks 30 im Inneren des Rohrkanals parallel zur Rohrkanalachse verfahrbar ist. In dem dargestellten Ausführungsbeispiel weist der Schüttgutaufgabebehälter 12 denselben Querschnitt wie jedes Wanderbettreaktormodul 5 auf. Damit der Schüttgutaufgabebehälter 12 zwischen der Chargierstation 2 und allen von ihm zu versorgenden Schüttgutbetten 18 verfahren werden kann, sind alle betroffenen Wanderbettreaktormodule durch einen Chargierkanal 15 parallel zur Rohrkanalachse miteinander verbunden. Siehe vor allem Figuren 6a und 6b.

Der Schüttgutaufgabebehälter 12 wird unter Bezugnahme auf die Figuren 3 bis 6a näher erläutert: Er besteht aus einer flachen Wanne mit einer Vielzahl von absperrbaren Entladeöffnungen 14 in Form von Mündungsöffnungen von flächenverteilt angeordneten Schüttguttrichtem mit Schüttgutaustrittsrohren 12A. Insoweit entspricht der Boden der flachen Wanne, d. h. des Schüttaufgabebehälters 12 der Art und Anordnung eines Schüttgutverteilbodens, wie er als stationäre Schüttgutverteilvorrichtung zwischen einem Schüttgutvorratsbunker und dem darunterliegenden Schüttgutbett angeordnet und aus der EP 0 357 653 B1 bereits bekannt ist. Der Unterschied zu dem Bekannten besteht darin, daß dieser Schüttgutverteilboden einen Umfassungsrahmen mit einem Fahrwerk aufweist und somit als verfahrbarer Wagen ausgestaltet ist. Unterhalb der Auslaufmündungen der Schüttgutaustrittsrohre 12A befindet sich ein über den gesamten Querschnitt gehendes Staublech 12B mit der Anordnung der Schüttgutaustrittsrohre 12A entsprechender Verteilung und Größe von Schüttgutdurchlaßöffnungen 12C. In der perspektivischen Darstellung der Fig. 6a ist eine Frontwand und ein Teil des Staubleches des verfahrbaren Schüttgutaufgabebehälters 12 der Übersichtlichkeit halber fortgelassen worden.

Eine Besonderheit des Schüttgutaufgabebehälters 12 besteht in einer, ggf. zusätzlichen, Seitenwand, die als Drosselmittel 27 (Fig. 4a/4b) zum Verschließen des Abströmfensters 7A dient. Diese von dem Schüttgutaufgabebehälter 12 mitbewegte Platte verhindert, daß in dem Bereich, in dem sich der Schüttgutaufgabebehälter 12 gerade befindet, behandeltes Fluid aus dem Gassammelraum 7 in den durchgehenden-Abströmkanal 29B übertreten kann. Dadurch werden eigenständige Absperr- oder Drosselklappen für jedes einzelne dieser Abströmfenster 7A entbehrlich.

Die Funktionsweise des Schüttgutaufgabebehälters 12 ist so, daß er in der in Figur 1a dargestellten Chargierposition 23 mit Schüttgut beladen und anschließend jeweils über dasjenige Schüttgutbett 18 verfahren wird, welches einen Schüttgutteilaustausch benötigt. Außer beim Schüttgutteilaustausch bleibt die Austragsvorrichtung, wie das Staublech 12B, geschlossen.

Der in der Chargierstation 23 stattfindende Chargiervorgang kann auf verschiedene Weise ablaufen. Bei der in Figur 1a dargestellten Ausführungsform ist ein Vorratsbunker 2A für Schüttgut mit einem absperrbaren Schüttgutaustragsboden 2B versehen. Durch letzteren wird der verfahrbare Schüttgutaufgabebehälter 12 mit frischem Schüttgut aus dem Vorratsbunker 2A befüllt.

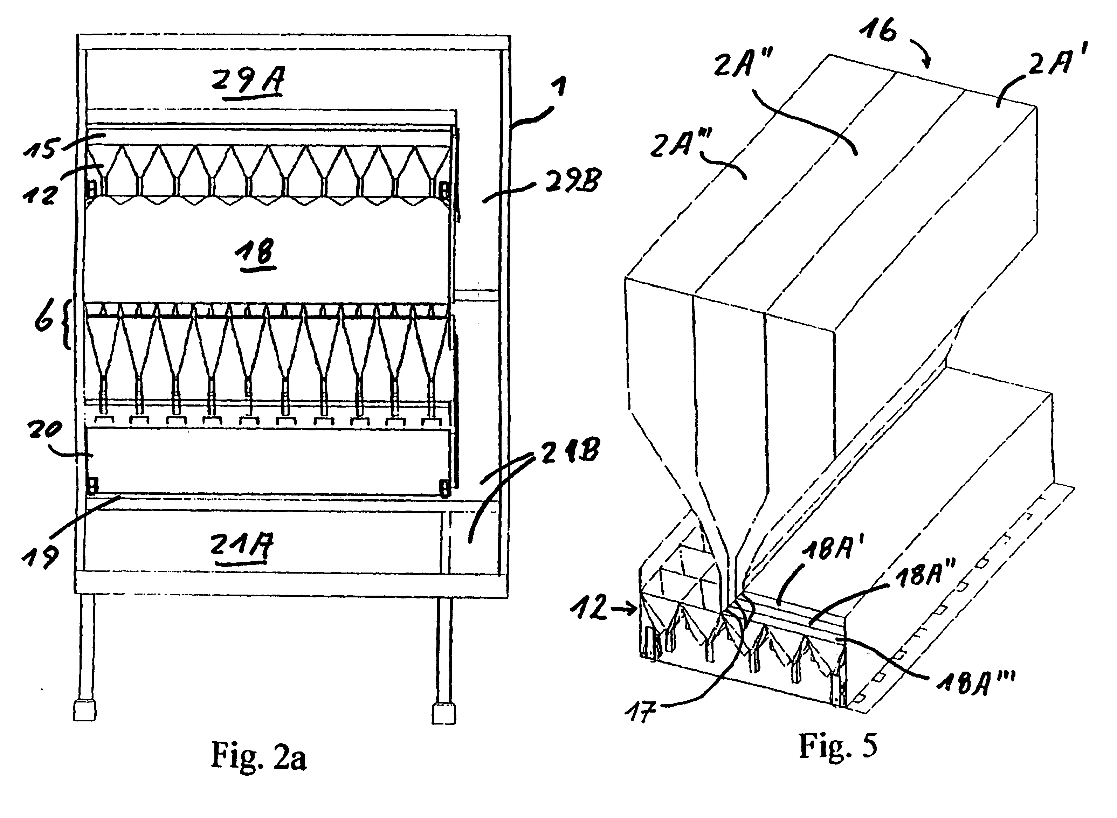

Alternativ kann der Chargiervorgang in der in Figur 5 dargestellten Weise erfolgen. Hier besitzt der Vorratsbunker 2A mindestens einen, bei dem Ausführungsbeispiel sind es drei, Schüttgutaustrittsschlitze am unteren Ende und sind Vorratsbunker und/oder Schüttgutaufgabebehälter in Richtung der Rohrkanalachse relativ zueinander verfahrbar. Dadurch kann eine Schüttgutschicht von einem zum anderen Ende des Schüttgutaufgabehälters (in Verfahrrichtung) eingefüllt werden. In dem dargestellten Ausführungsbeispiel ist der Vorratsbunker als verfahrbarer Chargierbehälter 16 ausgestaltet und in Teilbunker 2A', 2A" und 2A''' unterteilt. Jeder kann mit einem unterschiedlichen Schüttgut befüllt sein. Die Austragsschlitze (Chargier-öffnungen 17) liegen unterschiedlich tief, so daß Schüttgutschichten 18A', 18A", 18A''' in dem verfahrbaren Schüttgutaufgabebehälter 12 gebildet werden.

Der Schüttgutteilaustausch erfolgt in an sich bekannter Weise, nämlich indem die Schüttgutaustragsvorrichtung 6I des Anströmbodens 6 (Fig. 4a) horizontal unter Freigabe der Schüttgutrohrmündungen verschoben wird, während sich oberhalb des Schüttgutbettes 18 der Schüttgutaufgabebehälter 12 mit geöffneten Schüttgutaustrittsrohren 12A stationiert ist. Das Schüttgut sackt entsprechend der Betätigung der Schüttgutaustragsvorrichtung 6I von oben nach unten automatisch nach, so daß frisches Schüttgut von oben selbsttätig folgt.

Der Abtransport des ausgetragenen Schüttgutes kann an sich beliebig erfolgen. Bevorzugt wird ein verfahrbarer Schüttgutaufnahmebehälter 20 verwendet, der im Grunde mit dem Schüttgutaufgabebehälter 12 baugleich sein kann. Ein solches Beispiel wurde in den Figuren verwendet. Ein in dem Rohrkanal 1 ausgebildeter durchgehender Entsorgungskanal 19 gestattet ein die benachbarten Wanderbettreaktormodule überschreitendes Fahren des Schüttgutaufnahmebehälters 20. Dieser wird in der in Fig. 1a dargestellten Schüttgutaustragsposition 26 entleert.

Eine weitere Besonderheit des verfahrbaren Schüttgutaufnahmebehälters 20 ist eine als Drosselmittel 28 ausgebildete Seitenwand, welche (wie beim Schüttgutaufgabebehälter 12) mit verfahren wird und den Fluiddurchtritt durch das jeweilige Anströmfenster 6H des Wanderbettreaktormoduls, unter dem sich der Schüttgutaufnahmebehälter 20 gerade befindet, absperrt oder drosselt. Dadurch werden gesonderte Verstellklappen vermieden.

Eine wärmetechnisch besonders vorteilhafte Alternative für die Anordnung der Zuund Abströmkanäle zu und von den Wanderbettreaktormodulen entlang des Rohrkanals 1 ist in Fig. 2a dargestellt. Hier wurde den seitlichen Zu- und Abströmkanälen 21 B, 29B, die jetzt allerdings im Querschnitt kleiner ausfallen können, ein oberer Abströmkanal 29A und ein unterer Zuströmkanal 21A hinzugefügt. Diese sind auf ihrer gesamten Länge fluidisch miteinander verbunden, so daß der wesentliche Teil des zuströmenden, d. h. zu behandelnden Fluides unterhalb des Anströmbodens und der wesentliche Teil des abströmenden, d. h. behandelten Fluides oberhalb der Schüttgutbetten abströmen kann. Reaktorboden und Reaktordecke, d. h. Rohrkanalboden und Rohrkanaldecke sind damit beheizt und ersetzen die bisher übliche Begleitheizung.

Die erfindungsgemäße Fluidbehandlungsanlage gestattet eine wirtschaftliche Fluidbehandlung vor allem für extrem große Fluidmengen, wie einige Hunderttausend oder Millionen m3 Gas pro Stunde.

Ein besonders vorteilhaftes Fluidbehandlungsverfahren (Anspruch 18) besteht darin, kombiniert im Flugsstrom mit nachgeschaltetem Wanderbett das Fluid an zwei festen Schüttgütern zu behandeln, wobei das Wanderbett als Filter und Nachreaktionsstufe für das erste dem Fluidstrom aufgegebene feinteilige Schüttgut sowie als die zweite Behandlungsstufe dient. Bei bekannten Verfahren zum einstufigen Behandeln, insbesondere zum Reinigen von Fluiden, insbesondere von Gasen, mit mindestens einem ersten Schüttgut im Flugstrom ist es gebräuchlich, das erste Schüttgut in einem von dem Fluid generierten Flugstrom zu verteilen und von diesem bis zu einem Tuch-Filter mitreißen zu lassen und dort zurückzuhalten, während das Fluid den Tuch-Filter durchströmt. Eine erfindungsgemäße Fluidbehandlungsanlage arbeitet hingegen zweistufig, wobei als Filter für die Flugstromstufe ein ein Schüttgutbett als Filterfläche aufweisender Wanderbettreaktor verwendet wird. Dieser kann nicht nur als Nachreaktionsstufe für die (erste) Flugstromstufe dienen, sondern stellt gleichzeitig eine zweite Behandlungsstufe dar. Bei dieser durchströmt das Fluid ein Schüttgutbett von unten nach oben und ein zweites das Schüttgutbett bildendes Schüttgut durchwandert im Gegenstrom zum Fluid den Wanderbettreaktor von oben nach unten. Am unteren Ende des Schüttgutbettes werden Schüttgutteilmengen abgezogen und am oberen Ende des Schüttgutbettes aufgegeben. An dem zweiten Schüttgut, d. h. dem Schüttgut des Schüttgutbettes, und im Zwischenkom-Volumen zwischen seinen Schüttgutpartikel setzt sich das erste Schüttgut oder eine Fraktion davon aus dem Fluidstrom ab. Gemeinsam mit den auszutragenden Schüttgutteilmengen werden das gebrauchte erste und zweite Schüttgut am unteren Ende des Schüttgutbettes abgezogen. - Dieses Verfahren läßt sich natürlich auch dann vorteilhaft einsetzen, wenn die Befüllung des Wanderbettreaktors über stationäre Vorratsbunker und nicht über den erfindungsgemäß verfahrbaren Schüttgutaufgabebehälter erfolgt.

Mit diesem Verfahren eröffnet sich eine völlig neue Dimension der Flugstromtechnologie, und zwar für eine komplexere Behandlung von Gasen mit fein aufgemahlenen Schüttgütern im Flugstrom sowie zu deren Abscheidung. In beiden Fällen besteht nämlich das Problem, daß sich an der Filteroberfläche ein sogenannter Filterkuchen bildet, der ständig wächst. Das erhöht den Druckverlust allmählich. Zum anderen erhöht sich auch die Verweilzeit des zu filternden Gases in dem Filterkuchen allmählich. Weil nach einer gewissen Zeit der Druckverlust im Filterkuchen zu groß wird, muß dieser entfernt und nachfolgend neu aufgebaut werden. Dieses ist aufwendig und führt zu Inkontinuitäten in der Fluidbehandlung. Beide Probleme werden durch das erfindungsgemäße, als Wanderbettreaktor ausgebildete Schüttgutfilter vermieden, weil die Behandlungs-Partikel aus dem eintretenden Fluid sich in der Eingangszone des Schüttgutbettes absetzen, also dort, wo Schüttgut kontinuierlich oder quasi kontinuierlich aus dem Wanderbettreaktor abgezogen wird. Dadurch bleibt die Filtrationsleistung vergleichsweise konstant, so daß die oben erwähnten Inkontinuitäten weitgehend vermieden werden. Hier wird also ein sich quasi kontinuierlich selbstreinigender, die Filterkuchenstärke quasi konstant haltender Filter verwirklicht, der praktisch nie gereinigt werden muß.

Der besondere Vorteil dieses Verfahrens besteht darin, daß die (zweiten) Schüttgutpartikel des Wanderbettreaktors für weitere Fluidverhandlungsschritte dienen. So kann z. B. das dem zu behandelnden Fluidstrom unter Ausbildung eines Flugstromes aufgegebene erste Schüttgut staubförmige Aktivkohle sein, mit der eine adsorptive Gasreinigung durchgeführt wird, wobei diese zum Teil in der Flugstromphase und zum Teil dann stattfindet, wenn diese Aktivkohle in dem Wanderbettreaktor eingefangen ist. Dabei kann die Eindringtiefe der Partikel des ersten Schüttgutes in das Schüttgutbett durch entsprechende Steuerung des Schüttgutteilmengenaustausches beeinflußt werden.

Die zweiten Schüttgutpartikel können z. B. aus Adsorbentien, wie Calciumhydroxyd, NaOH oder einem anderen zur Behandlung des Fluides geeignetem festen partikelförmigen Material für die chemische Behandlung von anorganischen Schadstoffen, wie HCl, SO₂ etc., bestehen.Als Schüttgut für die Wanderbettreaktoren kommen unter anderem auch ein Granulat aus Braunkohle, Steinkohle, Kalkstein und/oder Sorbalit in Frage, die wiederum auch schichtweise im Schüttgutbett vorliegen können, was der Schüttguttransportwagen (Schüttgutaufgabebehälter) ermöglicht.

Außerdem versteht es sich, daß die aus dem Wanderbettreaktormodulen ausgetragenen Schüttgüter auch nach Schüttgutarten getrennt ausgetragen und auch wiederverwendet werden können, falls ihre Fluidbehandlungskapazität noch nicht voll ausgeschöpft ist.

### Ausführungsbeispiel 1

Es soll ein Gas von gasförmigen Schadstoffkomponenten, die zumindest teilweise nicht besonders gut adsorptiv gebunden werden können, gereinigt werden, z. B. von HCl, welches im Vergleich zu anderen in dem Abgas vorhandenen Schadstoffen, wie schweren Kohlenwasserstoffen, besser abgeschieden werden soll. Hierzu wird eine z.B. alkalische Verbindung in Partikelform (erstes Schüttgut) dem Abgas unter Ausbildung einer Flugstromwolke zugegeben. Durch die Zugabe von z. B. Calciumhydroxid (Ca(OH)₂) als alkalische Verbindung entsteht durch chemische Reaktion mit dem HCl Calciumchlorid (CaCl₂). Das Ca(OH)₂, dessen Kömung z. B. im µm-Bereich liegt, lagert sich auf der Oberfläche der Granulatkörner (zweites Schüttgut) im Schüttgut eines Gegenstromwanderbettreaktors der in den Figuren dargestellten Art ab. Da sich diese Ablagerung auf den Bereich des Anströmbodens des Gegenstromwanderbettreaktors konzentriert, werden die, ggf. chemisch veränderten, Partikel des ersten Schüttgutes zusammen mit den Granulatkömern des Schüttgutbettes schichtweise aus dem Gegenstromwanderbettreaktor ausgetragen.

Die Zudosierung des ersten Schüttgutes unter Ausbildung einer von dem zu behandelnden Abgas generierten Flugstromwolke erfolgt vorzugsweise getaktet, kann aber auch kontinuierlich durchgeführt werden. Durch die getaktete Dosierung wird ein besonders hoher chemischer Umsetzungsgrad, z. B. des Ca(OH)₂, erreicht. Dadurch werden Betriebsmittelkosten gesenkt.

Das den Flugstrom generierende, zu reinigende Abgas kann z. B. aus der Verbrennung von Biogasen oder von flüssigen oder gasförmigen chlorhaltigen Reststoffen stammen, bei denen kein oder nur sehr wenig feste Fremdstoff in Form von Staub enthalten sind oder entstehen. In diesen Fällen kann die Dosierung des ersten Schüttgutes unter Ausbildung der Flugstromwolke besonders intensiv erfolgen.

Wenn als Führungsgröße für das Austragen des Granulat/Partikel-Gemisches der Druckverlustanstieg im Gegenstromwanderbettreaktor verwendet wird, kann es sein, daß die volle Beladefähigkeit des Granulates mit schweren Kohlenwasserstoffen oder anderen aus dem Abgas zu reinigenden Schadstoffen noch nicht ausgeschöpft ist (dies kann natürlich auch für die Partikel aus der Flugstromwolke der Fall sein). In solchen Fällen können die Partikel (das erste Schüttgut) von dem Granulat (zweites Schüttgut) nach dem Austragen aus dem Gegenstromwanderbettreaktor getrennt werden und je nach Brauchbarkeit im Kreislauf in den zweistufigen Reinigungsprozeß zurückgeführt werden.

### Ausführungsbeispiel 2

Bei Sinterprozessen wird u. a. preiswerter Koks als Brennstoff eingesetzt. Dieser Koks kann vor dem Verbrennen auf dem Sinterband als Adsorptionsmittel in einem Gegenstromwanderbettreaktor dienen, um die Abgase aus dem Sinterprozeß von Schadstoffen adsorptiv zu reinigen, z. B. von Dioxinen, Furanen, unverbrannten schweren Kohlenwasserstoffen, Quecksilber u. a. Da der hierfür verwendete, in dem Sinterprozeß nachfolgend als Wärmequelle durch Verbrennen dienende Koks keine sonderlich guten adsorptiven Eigenschaften für die Abgasreinigung in dem Gegenstromwanderbettreaktor haben mag, kann der Fall eintreten, daß die geforderte Reingaskonzentration des gereinigten Abgases, z. B. bezüglich der Dioxine und Furane, unzureichend bleibt, wenn diese Schadstoffe in besonders hohen Konzentrationen im zu reinigenden Abgas auftreten. In einem solchen Fall wird dem Gegenstromwanderbettadsorber eine Flugstromreinigungsstufe unmittelbar vorgeschaltet. In dieser Flugstromstufe wird dem zu reinigenden Abgas ein Absorptionsmittel vergleichsweise höherer Qualität eingeblasen. Hierzu kann es bereits ausreichen, eine Teilmenge des genannten Kokses, besser aber einen hochwertigen Aktivkoks in gemahlener Form, also mit relativ kleineren Partikelgrößen als das Koksgranulat zu verwenden. In dieser Flugstromwolke werden dann bereits ein Teil der Schadstoffe an dem feinteiligen Adsorptionsmittel adsorbiert - und zwar sowohl in der Flugstromphase als auch nach dem Anlagern im Eingangsbereich des Schüttgutbettes des Gegenstromwanderbettreaktors (Nachreaktion). Die restliche Abgasreinigung erfolgt in üblicher Weise an dem partikelförmigen Koks im Gegenstromwanderbettreaktor.

Da bei solchen Sinterprozessen relativ große Koksmengen verbrannt werden, steht vergleichsweise viel zweites Schüttgut für das Schüttgutbett des Gegenstromwanderbettreaktors zur Verfügung, so daß die Schadstoffabscheidung und der Druckverlust sowie die Zudosierung von feinteiligem Adsorptionsmittel in den Flugstrom aufeinander abgestimmt und optimiert werden können. Während bevorzugte Kömungen des Koksgranulates im Bereich zwischen 2 - 6 mm liegen, ist die Körnung der Partikel für den Flugstrom deutlich geringer. Daher ist es auch möglich, den Rohkoks zunächst zu sieben und einen Siebschnitt oberhalb von 2 mm für den Gegenstromwanderbettreaktor und den Feinkornanteil oder Teile des Feinkomanteils für die Reinigung im Flugstrom zu verwenden.

### Bezugszeichenliste

- 1: Rohrkanal
- 2: Chargierstation
- 2A: Vorratsbunker
- 2A': Vorratsbunker
- 2A": Vorratsbunker
- 2A''': Vorratsbunker
- 2B: Austragsboden
- 3: Gaseintrittsstutzen
- 4: Gasaustrittsstutzen
- 5: Wanderbettreaktormodule
- 5A: Trennwände
- 6: Anströmboden
- 6A: erster Schüttgutabzugstrichter
- 6B: Durchtrittsöffnung
- 6C: Verteilelemente
- 6D: zweite Schüttgutabzugstrichter
- 6E: Schüttgutauslaßrohre
- 6F: Staubdecke
- 6G: Fluidverteilraum
- 6H: Anströmfenster
- 6I: Schüttgutaustragsvorrichtung
- 7: Gassammelraum
- 7A: Abströmfenster
- 10: Fluidbehandlungsanlage
- 11 A: Abströmkanal
- 11 B: Abströmkanal
- 12: Schüttgutaufgabebehälter
- 12A: Schüttgutaustrittsrohre
- 12B: Staublech
- 12C: Schüttgutdurchlaßöffnungen
- 13: Beladungsöffnung
- 14: Entladeöffnung
- 15: Chargierkanal
- 16: Chargierbehälter
- 17: Chargieröffnung
- 18: Schüttgutbett
- 18A': Schüttgutschicht
- 18A": Schüttgutschicht
- 18A''': Schüttgutschicht
- 19: Entsorgungskanal
- 20: Schüttgutaufnahmebehälter
- 21A: Zuströmkanal
- 21 B: Zuströmkanal
- 22A: Führungen
- 22B: Führungen
- 23: Chargierposition
- 24: Schüttgutteilaufgabeposition
- 25: Schüttgutteilnahmeposition
- 26: Schüttgutaustragsposition
- 27: Drosselmittel
- 28: Drosselmittel
- 29A: Abströmkanal
- 29B: Abströmkanal
- 30: Fahrwerk

## Patentansprüche

1. Verfahren zum Behandeln von Fluiden, insbesondere von Gasen, an mindestens einem Schüttgut,
bei dem das Fluid ein Schüttgutbett im wesentlichen von unten nach oben durchströmt und das Schüttgut das Schüttgutbett im Gegenstrom zum Fluid im wesentlichen von oben nach unten durchwandert, und bei dem am unteren Ende des Schüttgutbettes Schüttgutteilmengen abgezogen und am oberen Ende des Schüttgutbettes Schüttgutteilmengen dem Schüttgutbett aufgegeben werden,
wobei mehrere Schüttgutbetten parallel betrieben werden
bei dem das Schüttgutteilmengenaufgeben **dadurch gekennzeichnet ist, daß**
a) für den Schüttgutteilaustausch zum Aufgeben von Schüttgutteilmengen in das Schüttgutbett ein verfahrbarer Schüttgutaufgabebehälter mit einer Schüttgutverteilanordnung zum gleichmäßig schichtweisen Verteilen des Schüttgutes über das jeweilige Schüttgutbett mit mindestens einer Beladungsöffnung und mindestens einer verschließbaren Entladeöffnung verwendet wird,
b) der verfahrbare Schüttgutaufgabebehälter in mindestens einer Chargierposition mit Schüttgut beladen wird,
c) der Schüttgutaufgabebehälter über ein erstes Schüttgutbett verfahren und seine Entladeöffnung freigegeben wird, wobei das Schüttgut so lange abgegeben wird, wie für den Schüttgutteilaustausch erforderlich, also bis das darunter befindliche Schüttgutbett seine Sollhöhe an Schüttgut wieder erreicht hat oder der Schüttgutteilabzug beendet worden ist,
d) der Schüttgutaufgabebehälter zu einem anderen Schüttgutbett weiter verfahren wird, wobei die mindestens eine Entladeöffnung erforderlichenfalls geschlossen gehalten wird,
e) die Schritte der Schüttgutteilmengenabgabe und das anschließende Weiterverfahren für weitere Betten wiederholt werden und
f) nach vollzogenem Schüttgutteilaustausch der Schüttgutaufgabebehälter wieder in eine Chargierposition verfahren wird.

2. Verfahren nach Anspruch 1, **dadurch gekennzeichnet, daß** ein verfahrbarer Schüttgutaufnahmebehälter, wie eine Wanne oder ein Förderband, verwendet und nacheinander unter verschiedene Schüttgutbetten zur Schüttgutteilmengenaufnahme verfahren und schließlich in eine Schüttgutaustragsposition weiterverfahren wird.

3. Verfahren nach Anspruch 2, **dadurch gekennzeichnet, daß** sowohl der Schüttgutaufgabe- als auch der Schüttgutaufnahmebehälter jeweils über und unter dasselbe Schüttgutbett gefahren werden und die Schüttgutteilaustauschmenge durch die aus dem Bett ausgeschleuste Schüttgutteilmenge bestimmt wird.

4. Verfahren nach einem der Ansprüche 1 bis 3, **dadurch gekennzeichnet, daß** der zu behandelnde Fluidstrom durch das im Schüttgutteilaustausch befindliche Schüttgutbett mittels des Schüttgutaufgabebehälters oder mittels des Schüttgutaufnahmebehälters oder mittels beider unterbrochen oder gedrosselt wird.

5. Verfahren nach einem der Ansprüche 1 bis 4, **dadurch gekennzeichnet, daß** das Chargieren des Schüttgutaufgabebehälters schichtweise aus unterschiedlichen Vorratsbehältern erfolgt.

6. Verfahren nach Anspruch 5, **dadurch gekennzeichnet, daß** die Schichten aus mindestens einem Adsorptionsmittel, wie Aktivkoks, und mindestens einem Stoff zum chemischen Umsetzen von Komponenten aus dem zu behandelnden Fluid, z. B. aus Calciumhydroxid, bestehen.

7. Verfahren nach einem der Ansprüche 1 bis 6, **dadurch gekennzeichnet, daß** das Chargieren des Schüttgutaufgabebehälters mittels mindestens einer Spaltöffnung oder linienförmig angeordneter Öffnungen erfolgt und diese Öffnung und/oder der Schüttgutaufgabebehälter dabei relativ zueinander verfahren werden/wird.

8. Schüttgutaufgabevorrichtung zum Durchführen des Verfahrens nach einem der Ansprüche 1 bis 7 bei der das Fluid ein Schüttgutbett im wesenttichen von unten nach oben durchströmt und das Schüttgut das Schüttgutbett im Gegenstrom zum Fluid im wesentlichen von oben nach unten durchwandert, und bei dem am unteren Ende des Schüttgutbettes Schüttgutteilmengen abgezogen und am oberen Ende des Schüttgutbettes Schüttgutteilmengen dem Schüttgutbett aufgegeben werden,
wobei mehrere Schüttgutbetten parallel betrieben werden, **dadurch gekennzeichnet, daß**
a) für den Schüttgutteilaustausch zum Aufgeben von Schüttgutteilmengen in das Schüttgutbett ein verfahrbarer Schüttgutaufgabebehälter mit einer Schüttgutverteilanordnung zum gleichmäßig schichtweisen Verteilen des Schüttgutes über das jeweilige Schüttgutbett mit mindestens einer Beladungsöffnung und mindestens einer verschließbaren Entladeöffnung vorgesehen ist,
b) der verfahrbare Schüttgutaufgabebehälter in mindestens einer Chargierposition mit Schüttgut beladbar ist,
wobei der an Führungen (22A, 22B) verfahrbare Schüttgutaufgabebehälter (12) aus einer Wanne mit über den Wannenboden flächenverteilten oder mit linienförmig angeordneten, verschließbaren Entladeöffnungen (14) für Schüttgut besteht.

9. Schüttgutaufgabevorrichtung nach Anspruch 8, **dadurch gekennzeichnet, daß** mindestens ein Chargierbehälter (16) mit mindestens einer linienförmigen oder spaltförmigen Chargieröffnung (17) versehen ist und zum flächigen Beladen des Schüttgutaufgabebehälters (12) relativ zu diesem verfahrbar ist.

10. Fluidbehandlungsanlage, bestehend aus mehreren nebeneinander angeordneten, parallel betreibbaren Schüttgutbetten, bei denen das zu behandelnde Fluid ein Schüttgutbett im wesentlichen von unten nach oben durchströmt und das Schüttgut das Schüttgutbett im Gegenstrom zum Fluid im wesentlichen von oben nach unten durchwandert, indem am unteren Ende des Schüttgutbettes Schüttgutteilmengen abgezogen und am oberen Ende des Schüttgutbettes Schüttgutteilmengen dem Schüttgutbett aufgegeben werden, insbesondere zum Durchführen des Verfahrens nach einem der Ansprüche 1 bis 7, **dadurch gekennzeichnet, daß** die Schüttgutbetten durch einen gemeinsamen horizontalen Chargierkanal (15) miteinander verbunden sind und zumindest ein Schüttgutaufgabebehälter (12) durch den Chargierkanal (15) zwischen einer Chargierposition (23) und mehreren Schüttgutteilaufgabepositionen (24) oberhalb der Schüttgutbetten (18) verfahrbar ist.

11. Fluidbehandlungsanlage nach Anspruch 10, **dadurch gekennzeichnet, daß** der Chargierkanal (15) oder ein darüber und/oder dazu seitlich verlaufender Abströmkanal einen gemeinsamen Gassammelraum der Schüttgutbetten (18) bildet/bilden.

12. Fluidbehandlungsanlage nach Anspruch 10 oder 11, **dadurch gekennzeichnet, daß** mehrere Schüttgutbetten (18) durch einen gemeinsamen horizontalen Entsorgungskanal (19) miteinander verbunden sind und ein Schüttgutaufnahmebehälter (20) durch den Entsorgungskanal (19) zwischen Schüttgutteilaustauschpositionen (Schüttgutteilaufnahmepositionen 25) und mindestens einer Schüttgutaustragsposition (26) unterhalb der Schüttgutbetten (18) verfahrbar ist.

13. Fluidbehandlungsanlage nach Anspruch 12, **dadurch gekennzeichnet, daß** der Entsorgungskanal (19) oder ein darunter und/oder dazu seitlich verlaufender Zuströmkanal einen gemeinsamen Gasverteilraum der Schüttgutbetten (18) bildet.

14. Fluidbehandlungsanlage nach einem der Ansprüche 11 bis 13, **dadurch gekennzeichnet, daß** der Schüttgutaufgabebehälter (12) oder der Schüttgutaufnahmebehälter (20) oder beide mit Drosselmitteln (27, 28), wie geschlossenen Seitenwänden, versehen ist/sind, die den Gaseintritt nach unterhalb des Schüttgutbettes (18) bzw. den Gasaustritt nach außerhalb des Schüttgutbettes (18) unter- oder oberhalb dessen sich der betreffende Schüttgutaufgabe/-aufnahme-Behälter (12, 20) befindet, absperrt/en oder drosselt/n.

15. Fluidbehandlungsanlage nach einem der Ansprüche 11 bis 14, **dadurch gekennzeichnet, daß** der Schüttgutaufgabebehälter (12) und/oder der Schüttgutaufnahmebehälter (20) aus mindestens einer Reihe von Trichterelementen zusammengesetzt ist.

16. Fluidbehandlungsanlage nach einem der Ansprüche 11 bis 15, **dadurch gekennzeichnet, daß** für den Schüttgutteilmengenabzug aus dem Schüttgutbett (18) und die Fluidaufgabe in das Schüttgutbett (18) ein Anströmboden (6) verwendet wird, bei dem
- zumindest nebeneinander angeordnete erste Schüttgutabzugstrichter (6A) oder zumindest eine erste trichterförmige Schüttgutabzugsrinne vorgesehen ist,
- bei dem in den Seitenwänden jedes Trichters (6A) bzw. jeder Rinne Durchtrittsöffnungen (6B) für Anströmfluid angeordnet und über den Trichterumfang bzw. entlang der Rinne verteilt sind, und oberhalb jeder Durchtrittsöffnung (6B) ein unten offenes, dachförmiges Verteilelement (6C) für Anströmfluid trichterinnenseitig bzw. rinneninnenseitig von der Seitenwand zum Trichterinneren bzw. Rinneninneren hin absteht.

17. Fluidbehandlungsanlage nach einem der Ansprüche 1 bis 16, **dadurch gekennzeichnet, daß** sie als länglicher, gegebenenfalls mit einer oder mehreren Umkehrschleifen versehener Überführungskanal (Rohrkanal 1) für das zu behandelnde Fluid zwischen dem Fluidabgabeende eines ersten Reaktors und dem Fluidaufnahmeende eines anderen Reaktors ausgeführt ist.

18. Verfahren zum Behandeln, insbesondere zum Reinigen, von Fluiden, insbesondere von Gasen, mittels mindestens einem ersten Schüttgut (Behandlungsmittel I), bei dem das erste Schüttgut einem Fluidstrom (Flugstrom) aufgegeben und von diesem bis zu einem Filter mittransportiert und dort an der Oberfläche des Filters zurückgehalten wird, während das Fluid den Filter durchströmt, wobei der von dem ersten Schüttgut auf dem Filter gebildete Filterkuchen von Zeit zu Zeit zumindest teilweise entfernt wird, nach einem der Ansprüche 1 bis 7,
**dadurch gekennzeichnet,**
a) daß das zu behandelnde, mit dem Behandlungsmittel I vermischte Fluid zum Nachreagieren und Weiterbehandeln durch einen ein Schüttgutbett aus einem zweiten Schüttgut (Behandlungsmittel II) bildenden Wanderbettreaktor geführt wird, bei dem das Fluid das Schüttgutbett im wesentlichen von unten nach oben durchströmt und das zweite Schüttgut das Schüttgutbett im Gegenstrom zum Fluid im wesentlichen von oben nach unten durchwandert, aus dem am unteren Ende des Schüttgutbettes Schüttgutteilmengen abgezogen und in den am oberen Ende des Schüttgutbettes Schüttgutteilmengen aufgegeben werden, wobei an dem zweiten Schüttgut, d. h. der Oberfläche der Schüttgutpartikelund/oder im Zwischenkorn-Volumen zwischen seinen Schüttgutpartikeln das erste Schüttgut oder eine Fraktion davon aus dem Fluidstrom sich, insbesondere im Anströmbereich des zweiten Schüttgutes, absetzt,
b) daß das zu behandelnde Fluid an dem abgesetzten ersten Schüttgut (Behandlungsmittel I) ggf. nachreagiert und mittels des zweiten Schüttgutes (Behandlungsmittel II) in dem Wanderbettreaktor weiterbehandelt wird,
c) daß mit den Schüttgutteilmengen am unteren Ende des Schüttgutbettes die gemeinsam abgezogen werden.

19. Verfahren nach Anspruch 18, **dadurch gekennzeichnet, dass** das zu behandelnde Fluid an den auf dem zweiten Schuttgut abgesetzten ersten Schüttgut (Behandlungsmittel I) nachreagiert.

20. Verfahren nach Anspruch 18 oder 19, **dadurch gekennzeichnet, dass** das zu behandelnde Fluid mittels des zweiten Schüttgutes (Behandlungsmittel II) in dem Wanderbettreaktor weiter behandelt wird.

21. Verfahren nach einem der Ansprüche 18 bis 20, **dadurch gekennzeichnet, dass** das erste Schüttgut (Behandlungsmittel I) staubförmige Aktivkohle oder ein staubförmiger Katalysotor ist.

22. Verfahren nach einem der Ansprüche 18 bis 21, **dadurch gekennzeichnet, dass** das erste Schüttgut (Behandlungsmittel I) eine alkalische Verbindung in Partikelform ist.

23. Verfahren nach Anspruch 22, **dadurch gekennzeichnet, dass** die alkalische Verbindung Calciumhydroxid ist.

24. Verfahren nach einem der Ansprüche 18 bis 23, **dadurch gekennzeichnet, dass** das zweite Schüttgut (Behandlungsmittel II) Calciumhydroxid oder Natriumhydroxid oder ein Mischprodukt der beiden vorgenannten Hydroxide mit Aktivkohle oder einem anorganischem Katalysator ist.

25. Verfahren nach einem der Ansprüche 18 bis 24, **dadurch gekennzeichnet, dass** das zweite Schüttgut (Behandlungsmittel II) ein partikelförmiges Material für die chemische Behandlung von anorganischen Schadstoffen, wie HCl, SO₂, ist.

26. Verfahren nach einem der Ansprüche 18 bis 25, **dadurch gekennzeichnet, dass** das zweite Schüttgut (Behandlungsmittel II) ein Granulat aus Braunkohle, Steinkohle, Kalkstein und Sorbalit ist.

27. Verfahren nach Anspruch 26, **dadurch gekennzeichnet, dass** das Granulat im Schüttgutbett schichtweise vorliegt.

28. Verfahren nach einem der Ansprüche 18 bis 27, **dadurch gekennzeichnet, dass** die aus dem Wanderbettreaktor ausgetragenen Schüttgüter nach Schüttgutarten getrennt ausgetragen werden.

29. Verfahren nach einem der Ansprüche 18 bis 28, **dadurch gekennzeichnet, dass** die Zudosierung des ersten Schüttgutes (Behandlungsmittel I) unter Ausbildung einer an dem zu behandelnden Abgas generierten Flugstromwolke getaktet erfolgt.

30. Verfahren nach-einem der Ansprüche 18 bis 29, **dadurch gekennzeichnet, dass** als Führungsgröße für das Austragen eines Granulat/Patikel-Gemisches aus dem Wanderbettreaktor der Druckverlustanstieg im Wanderbettreaktor oder die Konzentration der zu reinigenden Fluidkomponente verwendet wird.

31. Verfahren zum Behandeln von Abgasen aus einem Sinterprozess in einem Gegenstromwanderbettreaktor nach einem der Ansprüche 1 bis 7 bei dem das Abgas von Schadstoffen absortiv gereinigt werden, **dadurch gekennzeichnet, dass** das Absortionsmittel in dem Wanderbettreaktor ein Koks ist und dass dieser Koks nachfolgend auf dem Sinterband als zu verbrennender Brennstoff für den Sinterprozess eingesetzt wird.

32. Verfahren nach Anspruch 31, **dadurch gekennzeichnet, dass** dem Gegenstromwanderbettabsorber eine als Vorreinigungsstufe dienende Flugstromreinigungsstufe unmittelbar vorgeschaltet wird.

33. Verfahren nach Anspruch 32, **dadurch gekennzeichnet, dass** in der Flugstromstufe dem zu reinigenden Abgas ein Absortionsmittel einer im Vergleich zum Adsortionsmittel im Gegenstromwanderbettadsorber höheren Qualität eingeblasen wird.

34. Verfahren nach einem der Ansprüche 31 bis 33, **dadurch gekennzeichnet, dass** im Gegenstromwanderbettreaktor ein Koksgranulat mit einer Körnung im Bereich zwischen 2 bis 6 oder 8 mm eingesetzt wird.

35. Verfahren nach Anspruch 34, **dadurch gekennzeichnet, dass** in einer dem Gegenstromwanderbettadsorber vorgeschalteten Flugstromreinigungsstufe für den Flugstrom Partikel deutlich geringerer Körnung als in dem Gegenstromwanderbettadsorber eingesetzt werden.

36. Verfahren nach einem der Ansprüche 31 bis 35, **dadurch gekennzeichnet, dass** ein Rohkoks zunächst gesiebt wird und ein Siebschnitt oberhalb von 2 mm für den Gegenstromwanderbettreaktor und der Feinkornanteil oder Teile des Feinkornanteils für die Abgasreinigung in einer vorgeschalteten Flugstromreinigungsstufe verwendet wird.

## Claims

1. A method of treating fluids, more particularly gases, on at least one bulk material, in which method the fluid flows through a bulk material bed substantially upwards from below and the bulk material travels through the bulk material bed in countercurrent to the fluid substantially downwards from above, and in which method partial quantities of bulk material are withdrawn from the bottom end of the bulk material bed and partial quantities of bulk material are fed to the bulk material bed at the top end of the said bed,
a plurality of bulk material beds being operated in parallel
in which method the feeding of the partial quantities of bulk material is **characterised in that**
a) for the partial exchange of bulk material for the purpose of feeding bulk material partial quantities into the bulk material bed use is made of a mobile bulk material feed container with a bulk material distributing arrangement for uniform layer-wise distribution of the bulk material over the respective bulk material bed with at least one charging opening and at least one closable discharging opening,
b) the mobile bulk material feed container is charged with bulk material in at least one charging position,
c) the bulk material feed container is moved over a first bulk material bed and its discharge opening is released, the bulk material being delivered as long as necessary for the partial bulk material exchange, i.e. until the bulk material bed situated therebeneath has again reached its set-value height in respect of bulk material or the partial withdrawal of bulk material has been completed,
d) the bulk material feed container is moved on to another bulk material bed, the at least one discharge opening being kept closed if necessary,
e) the steps of delivering partial quantities of bulk material and the subsequent moving on are repeated for other beds and
f) after completion of the partial exchange of bulk material the bulk material feed container is returned to a charging position.

2. A method according to claim 1, **characterised in that** a mobile bulk material receiving container, such as a tank or a conveyor belt, is used and is moved successively beneath different bulk material beds for the reception of partial quantities of bulk material and is finally moved on into a bulk material delivery position.

3. A method according to claim 2, **characterised in that** both the bulk material feed container and the bulk material receiving container are each moved above and below the same bulk material bed and the partial exchange quantity of bulk material is determined by the partial quantity of bulk material sluiced out of the bed.

4. A method according to any one of claims 1 to 3, **characterised in that** the fluid stream for treatment is interrupted or throttled by the bulk material bed undergoing partial exchange of bulk material, by means of the bulk material feed container or by means of the bulk material receiving container or by means of both.

5. A method according to any one of claims 1 to 4, **characterised in that** the charging of the bulk material feed container is effected layer-wise from different supply containers.

6. A method according to claim 5, **characterised in that** the layers consist of at least one adsorption agent, such as active coke, and at least one substance for chemical react.ion of components from the fluid for treatment, for example, calcium hydroxide.

7. A method according to any one of claims 1 to 6, **characterised in that** the charging of the bulk material feed container is effected by means of at least one gap opening or openings arranged in the form of a line and said opening and/or the bulk material feed container is/are moved relatively to one another during this.

8. A bulk material feed device for performing the method according to any one of claims 1 to 7, in which device the fluid flows through a bulk material bed substantially upwards from below and the bulk material travels through the bulk material bed in countercurrent to the fluid substantially downwards from above, and in which method partial quantities of bulk material are withdrawn from the bottom end of the bulk material bed and partial quantities of bulk material are fed to the bulk material bed at the top end of said bed,
a plurality of bulk material beds being operated in parallel, **characterised in that**
a) for the partial exchange of bulk material for the purpose of feeding bulk material partial quantities into the bulk material bed use is made of a mobile bulk material feed container with a bulk material distributing arrangement for uniform layer-wise distribution of the bulk material over the respective bulk material bed with at least one charging opening and at least one closable discharging opening,
b) the mobile bulk material feed container is adapted to be charged with bulk material in at least one charging position,
wherein the bulk material feed container (12) movable on guides (22A, 22B) consists of a tank with closable discharge openings (14) for bulk material, said openings being distributed over the surface of the base of the tank or arranged in line.

9. A bulk material feed device according to claim 8, **characterised in that** the at least one charging container (16) is provided with at least one charging opening (17) in line or gap form and for surface charging of the bulk material feed container (12) is movable relatively to the latter.

10. A fluid treatment plant consisting of a plurality of bulk material beds which are disposed side by side and which are adapted to be operated in parallel relationship, wherein the fluid for treatment flows through a bulk material bed substantially upwards from below and the bulk material travels through the bulk material bed in countercurrent to the fluid substantially downwards from above, partial quantities of bulk material being withdrawn from the bottom end of the bulk material bed and partial quantities of bulk material being fed to the bulk material bed at the top end of said bed, particularly for performing the method according to any one of claims 1 to 7, **characterised in that** the bulk material beds are interconnected by a common horizontal charging channel (15) and at least one bulk material feed container (12) is adapted to move through the charging channel (15) between a charging position (23) and a plurality of bulk material partial feed positions (24) above the bulk material beds (18).

11. A fluid treatment plant according to claim 10, **characterised in that** the charging channel (15) or an outflow channel extending thereabove and/or laterally thereof form/forms a common gas collecting chamber of the bulk material beds (18).

12. A fluid treatment plant according to claim 10 or 11, **characterised in that** a plurality of bulk material beds (18) are interconnected by a common horizontal disposal channel (19) and a bulk material feed container (20) is adapted to move through the disposal channel (19) between bulk material partial exchange positions (bulk material partial receiving positions 25) and at least one bulk material delivery position (26) beneath the bulk material beds (18).

13. A fluid treatment plant according to claim 12, **characterised in that** the disposal channel (19) or an inflow channel extending therebeneath and/or laterally thereof forms a common gas distribution chamber of the bulk material beds (18).

14. A fluid treatment plant according to any one of claims 11 to 13, **characterised in that** the bulk material feed container (12) or the bulk material receiving container (20) or both is/are provided with throttle means (27, 28), such as closed side walls, which shut/shuts off or throttles/throttle the gas entry to beneath the bulk material bed (18) and the gas exit to outside the bulk material bed (18) beneath or above which the bulk material feed/receiving container (12, 20) in question is situated.

15. A fluid treatment plant according to any one of claims 11 to 14, **characterised in that** the bulk material feed container (12) and/or the bulk material receiving container (20) is made up of at least one row of hopper elements.

16. A fluid treatment plant according to any one of claims 11 to 15, **characterised in that** an incident flow base (6) is used for withdrawal of partial quantities of bulk material from the bulk material bed (18) and for the fluid feed to the bulk material bed (18), wherein
- at least first bulk material withdrawal hoppers (6A) disposed side by side or at least one first bulk material discharge chute in the form of a hopper is provided,
- wherein passage openings (6B) for incident flow fluid are disposed in the side walls of each hopper (6A) or each chute and are distributed over the hopper periphery or along the chute, and above each passage opening (6B) a downwardly open roof-shaped distributor element (6C) for incident flow fluid projects from the inside of the hopper and inside of the chute from the side wall towards the hopper interior or chute interior.

17. A fluid treatment plant according to any one of claims 1 to 16, **characterised in that** it is constructed as an elongate transfer channel (tubular channel 1) provided if required with one or more reversal loops, for the fluid for treatment, between the fluid discharge end of a first reactor and the fluid receiving end of another reactor.

18. A method of treating fluids, particularly gases, by means of at least one first bulk material (treatment medium I), wherein the first bulk material is fed to a fluid stream (fly stream) and is entrained by the latter to a filter where it is retained at a filter surface, while the fluid flows through the filter, the filter cake formed by the first bulk material on the filter being at least partially removed from time to time, according to any one of claims 1 to 7,
**characterised in that**
a) for post-reaction and further treatment the fluid for treatment mixed with the treatment medium I is passed through a travelling bed reactor forming a bulk material bed from a second bulk material (treatment medium II), the fluid flowing through the bulk material bed substantially upwards from below and the second bulk material travelling through the bulk material bed in countercurrent to the fluid substantially downwards from above, partial quantities of bulk material are withdrawn from the bottom end of the bulk material bed and partial quantities of bulk material are fed to the top end of the bulk material bed, the first bulk material or a fraction thereof being deposited out of the fluid stream at the second bulk material and/or in the inter-particle volume between its bulk material particles,
b) **in that** the fluid for treatment is, if required, post-reacted.at the deposited first bulk material (treatment medium I) and is further treated by means of the second bulk material (treatment medium II) in the travelling bed reactor,
c) the first and second bulk material particles are withdrawn jointly with the partial quantities of bulk material at the bottom end of the bulk material bed.

## Revendications

1. Procédé destiné au traitement de fluides, notamment de gaz, au niveau d'au moins un matériau en vrac,
selon lequel le fluide traverse un lit de matériau en vrac essentiellement du bas vers le haut et le matériau en vrac traverse le lit de matériau en vrac essentiellement du haut vers le bas dans un écoulement inverse par rapport au fluide, et des quantités partielles de matériau en vrac sont extraites à l'extrémité inférieure du lit de matériau en vrac et des quantités partielles de matériau en vrac sont distribuées dans le lit de matériau en vrac à l'extrémité supérieure du lit de matériau en vrac, plusieurs lits de matériau en vrac étant entraînés en parallèle,
**caractérisé en ce que**
la distribution de quantités partielles de matériau en vrac s'effectue pour que
a) pour l'échange partiel de matériau en vrac, destiné à la distribution de quantités partielles de matériau en vrac dans le lit de matériau en vrac, on utilise un conteneur mobile de distribution de matériau en vrac et comprenant une installation de répartition du matériau en vrac pour distribuer sous forme de couches homogènes le matériau en vrac sur le lit de matériau en vrac respectif au moyen d'au moins une ouverture de chargement et d'au moins une ouverture de déchargement pouvant être fermée,
b) le conteneur mobile de distribution de matériau en vrac est chargé de matériau en vrac dans au moins une position de chargement,
c) le conteneur de distribution de matériau en vrac est déplacé au-dessus d'un premier lit de matériau en vrac et son ouverture de déchargement est libérée, le matériau en vrac étant distribué aussi longtemps qu'il est nécessaire pour l'échange partiel de matériau en vrac, soit jusqu'à ce que le lit de matériau en vrac situé en dessous ait atteint de nouveau une hauteur théorique de matériau en vrac ou que l'extraction partielle du matériau en vrac est terminée,
d) le conteneur de distribution de matériau en vrac est de nouveau déplacé vers un autre lit de matériau en vrac, l'au moins une ouverture de déchargement étant maintenue fermée si nécessaire,
e) on répète les étapes de distribution des quantités partielles de matériau en vrac et le redéplacement suivant vers d'autres lits, et
f) après l'accomplissement de l'échange partiel du matériau en vrac, le conteneur de distribution du matériau en vrac est redéplacé dans une position de chargement.

2. Procédé selon la revendication 1,
**caractérisé en ce qu'**
on utilise un conteneur mobile de réception du matériau en vrac, comme une cuve ou une bande transporteuse, on le déplace successivement sous différents lits de matériau en vrac pour recevoir des quantités partielles de matériau en vrac et on le redéplace ensuite dans une position de vidage du matériau en vrac.

3. Procédé selon la revendication 2,
**caractérisé en ce qu'**
aussi bien le conteneur de distribution du matériau en vrac que celui de réception du matériau en vrac sont déplacés à chaque fois au-dessus et en dessous du même lit de matériau en vrac et la quantité d'échange partiel du matériau en vrac est déterminée par la quantité partielle du matériau en vrac extraite du lit.

4. Procédé selon l'une des revendications 1 à 3,
**caractérisé en ce que**
l'écoulement de fluide à traiter au travers du lit de matériau en vrac situé dans l'échange partiel du matériau en vrac est interrompu ou restreint au moyen du conteneur de distribution de matériau en vrac ou au moyen du conteneur de réception du matériau en vrac ou au moyen des deux conteneurs.

5. Procédé selon l'une des revendications 1 à 4,
**caractérisé en ce que**
le chargement du conteneur de distribution du matériau en vrac s'effectue par couches à partir de différents conteneurs de stockage.

6. Procédé selon la revendication 5,
**caractérisé en ce que**
les couches sont composées d'au moins un moyen d'adsorption, tel le coke actif, et d'au moins une matière pour transformer chimiquement des composants à partir du fluide à traiter, par exemple à partir d'hydroxyde de calcium.

7. Procédé selon l'une des revendications 1 à 6,
**caractérisé en ce que**
le chargement du conteneur de distribution du matériau en vrac s'effectue au moyen d'au moins un orifice en forme de fente ou d'ouvertures disposées en ligne et cette ouverture et/ou les conteneurs de distribution du matériau en vrac est/sont déplacés les un(e)s par rapport aux autres.

8. Dispositif de distribution du matériau en vrac destiné à mettre en oeuvre le procédé selon l'une des revendications 1 à 7,
dans lequel le fluide traverse un lit de matériau en vrac essentiellement du bas vers le haut et le matériau en vrac traverse le lit de matériau en vrac essentiellement du haut vers le bas dans un écoulement inverse par rapport au fluide, et des quantités partielles de matériau en vrac sont extraites à l'extrémité inférieure du lit de matériau en vrac, et des quantités partielles de matériau en vrac sont distribuées dans le lit de matériau en vrac à l'extrémité supérieure du lit de matériau en vrac, plusieurs lits de matériau en vrac étant entraînés en parallèle,
**caractérisé en ce que**
a) pour l'échange partiel de matériau en vrac, destiné à la distribution de quantités partielles de matériau en vrac dans le lit de matériau en vrac, on utilise un conteneur mobile de distribution de matériau en vrac comprenant une installation de répartition du matériau en vrac pour distribuer sous forme de couches homogènes le matériau en vrac sur le lit de matériau en vrac respectif au moyen d'au moins une ouverture de chargement et d'au moins une ouverture de déchargement pouvant être fermée,
b) le conteneur mobile de distribution de matériau en vrac est chargé de matériau en vrac dans au moins une position de chargement,
dans lequel le conteneur mobile de distribution du matériau en vrac est composé, au niveau des guidages (22A, 22B), d'une cuve comprenant des ouvertures de déchargement du matériau en vrac pouvant être fermées (14) qui sont disposées au-dessus du fond des cuves de manière répartie à la surface ou alignées.

9. Dispositif de distribution du matériau en vrac selon la revendication 8,
**caractérisé en ce qu'**
au moins un conteneur de chargement (16) est doté d'au moins une ouverture de chargement (17) alignée ou en forme de fente et qui est mobile par rapport à celui-ci pour le chargement à plat du conteneur de distribution du matériau en vrac (12).

10. Installation de traitement de fluide, composée de plusieurs lits de matériau en vrac pouvant être entraînés parallèlement et disposés les uns à côté des autres, dans laquelle le fluide à traiter traverse un lit de matériau en vrac essentiellement du bas vers le haut et le matériau en vrac traverse le lit de matériau en vrac essentiellement du haut vers le bas, dans un écoulement inverse par rapport au fluide, et dans laquelle des quantités partielles de matériau en vrac sont extraites à l'extrémité inférieure du lit de matériau en vrac et des quantités partielles de matériau en vrac sont distribuées dans le lit de matériau en vrac à l'extrémité supérieure du lit de matériau en vrac, notamment pour mettre en oeuvre le procédé selon l'une des revendications 1 à 7,
**caractérisée en ce que**
les lits de matériau en vrac sont reliés ensemble par un canal de chargement (15) horizontal et commun et au moins un conteneur de distribution de matériau en vrac (12) peut être déplacé par le canal de chargement (15) entre une position de chargement (23) et plusieurs positions de distribution partielle du produit en vrac (24) au-dessus des lits de matériau en vrac (18).

11. Installation de traitement de fluide selon la revendication 10,
**caractérisée en ce que**
le canal de chargement (15) ou un canal de déversement s'étendant latéralement par rapport à celle-ci et/ou au-dessus de celle-ci forme un espace commun de collecte de gaz pour les lits de matériau en vrac (18).

12. Installation de traitement de fluide selon la revendication 10 ou 11,
**caractérisée en ce que**
plusieurs lits de matériau en vrac (18) sont reliés ensemble par un canal de récupération (19) horizontal et commun et un conteneur de réception de matériau en vrac (20) peut être déplacé, par le canal de récupération (19) entre des positions d'échange partiel de matériau en vrac (positions 25 de réception partielle du matériau en vrac) et au moins une position de vidage du matériau en vrac (26) en dessous des lits de matériau en vrac (18).

13. Installation de traitement de fluide selon la revendication 12,
**caractérisée en ce que**
le canal de récupération (19) ou un canal d'admission s'étendant latéralement par rapport à celle-ci et/ou en dessous de celle-ci forme un espace de distribution gazeuse commun pour les lits de matériau en vrac (18).

14. Installation de traitement de fluide selon l'une des revendications 11 à 13,
**caractérisée en ce que**
le conteneur de distribution du matériau en vrac (12) ou le conteneur de réception du matériau en vrac (20) ou les deux conteneurs est/sont doté(s) de moyens d'étranglement (27, 28), telles des parois latérales fermées, qui bloque(nt) ou restreint (restreignent) l'entrée de gaz vers le dessous du lit de matériau en vrac ( 18), respectivement l'entrée de gaz vers l'extérieur du lit de matériau en vrac (18) en dessous ou au-dessus duquel se situe le conteneur de distribution/réception du matériau en vrac (12, 20).

15. Installation de traitement de fluide selon l'une des revendications 11 à 14,
**caractérisée en ce que**
le conteneur de distribution du matériau en vrac (12) et/ou le conteneur de réception du matériau en vrac (20) est au moins composé d'une rangée d'éléments de trémie.

16. Installation de traitement de fluide selon l'une des revendications 11 à 15,
**caractérisée en ce que**
pour extraire du lit de matériau en vrac (18) les quantités partielles du matériau en vrac et pour la distribution de fluide dans le lit de matériau en vrac (18), on utilise un fond d'écoulement (6), dans lequel :
- on prévoit au moins des premières trémies d'extraction du matériau en vrac (6A) disposées les unes à côté des autres ou au moins une première rainure d'extraction du matériau en vrac en forme de trémie,
- dans les parois latérales de chaque trémie (6A), respectivement de chaque rainure, des ouvertures de passage (6B) sont disposées pour le fluide circulant et sont réparties sur la circonférence de la trémie, respectivement le long de la rainure, et au-dessus de chaque ouverture de passage (6B) un élément distribution (6C) ouvert en bas et en forme de toit pour le fluide d'écoulement dépasse, sur le côté intérieur de la trémie, respectivement le côté intérieur de la rainure, de la paroi latérale par rapport à l'intérieur de la trémie, respectivement l'intérieur des rainures.

17. Installation de traitement de fluide selon l'une des revendications 11 à 16,
**caractérisée en ce qu'**
elle est réalisée sous la forme d'un canal de transfert (canal tubulaire 1) longitudinal, le cas échéant doté d'un ou de plusieurs circuits inversés, pour le fluide à traiter entre l'extrémité du déversement de fluide d'un premier réacteur et l'extrémité de réception de fluide d'un autre réacteur.

18. Procédé destiné au traitement de fluides, notamment de gaz, au moyen d'au moins un premier matériau en vrac (moyen de traitement I), dans lequel le premier matériau en vrac est distribué dans un écoulement de fluide (écoulement en vol) et entraîné de celui-ci jusqu'à un filtre et, de là, retenu au niveau d'une surface de filtre, tandis que le fluide traverse le filtre, le gâteau de filtration formé par le premier matériau en vrac sur le filtre est enlevé au moins partiellement de temps en temps, selon l'une des revendications 1 à 7,
**caractérisé en ce que**
a) le fluide à traiter, mélangé avec le moyen de traitement I, est amené pour une nouvelle réaction et un nouveau traitement par un réacteur à lit mobile formant un lit de matériau en vrac à partir d'un deuxième matériau en vrac (moyen de traitement II), dans lequel le fluide traverse le lit de matériau en vrac essentiellement du bas vers le haut et le deuxième matériau en vrac traverse le lit de matériau en vrac essentiellement du haut vers le bas dans un écoulement inverse par rapport au fluide, et à partir duquel des quantités partielles de matériau en vrac sont extraites à l'extrémité inférieure du lit de matériau en vrac et des quantités partielles de matériau en vrac sont distribuées à l'extrémité supérieure du lit de matériau en vrac, le premier matériau en vrac ou une fraction de celui-ci est extrait de l'écoulement de fluide au niveau du deuxième matériau en vrac et/ou dans le volume de grains intermédiaire entre ses particules de matériau en vrac,
b) le fluide à traiter est, le cas échéant, soumis à une nouvelle réaction, au niveau du premier matériau en vrac extrait (moyen de traitement I) et retraité au moyen du deuxième matériau en vrac (moyen de traitement II) dans le réacteur à lit mobile,
c) avec les quantités partielles de matériau en vrac au niveau de l'extrémité inférieure du lit de matériau en vrac, les premières et deuxièmes particules de matériau en vrac sont extraites ensemble.
